# EUROPEAN PATENT SPECIFICATION

(11) **EP 0 811 293 B1**
(45) Date of publication and mention of the grant of the patent: **17.10.2001**
(21) Application number: 96909509.0
(22) Date of filing: 23.02.1996
(51) Int. Cl.: H04N 5/77

(54) **MOTION PICTURE RECORDING DEVICE USING DIGITAL, COMPUTER-READABLE NON-LINEAR MEDIA**
ANLAGE UM BEWEGTE BILDER AUFZUNEHMEN, DIE NUMERISCHE, DURCH RECHNER LESBARE NICHT-LINEARE MEDIEN BENUTZT
DISPOSITIF D'ENREGISTREMENT CINEMATOGRAPHIQUE UTILISANT DES SUPPORTS NUMERIQUES NON LINEAIRES LISIBLES SUR ORDINATEUR

(30) Priority: 23.02.1995 US 392536; 07.04.1995 US 418631; 07.04.1995 US 418186; 07.04.1995 US 418948
(43) Date of publication of application: 10.12.1997
(73) Proprietor: AVID TECHNOLOGY, INC., Tewksbury, MA 01876 (US)
(72) Inventor: FASCIANO, Peter, Natick, MA 01760 (US); McKAIN, Jim, Andover, MA 01810 (US); Kurtze, Jeffrey D., Nashua, NH 03062 (US); Der, Harry, Westford, MA 01886 (US); DiSciullo, Stephen M., Danvers, MA 01923 (US); Greaves, Paul H., Tyngsboro, MA 01879 (US)
(74) Representative: Moir, Michael Christopher
(86) International application number: US9602460
(87) International publication number: WO9626601

(56) References cited:
- EP-A- 0 422 447
- EP-A- 0 617 542
- WO-A-93/12481
- DE-A- 4 304 506
- US-A- 4 507 689
- US-A- 4 550 343
- US-A- 5 084 775
- US-A- 5 179 437
- US-A- 5 239 419
- US-A- 5 301 026
- SMPTE JOURNAL, vol. 99, no. 8, August 1990, US, pages 634-638, XP000142532 L. J. GARDNER ET AL.: "A Closed-Loop Digital Video Editing System"

## Description

### Field of the Invention

This invention relates to motion picture recording devices and processes.

### Background of the Invention

Present day video recorders are typically a combination of a video camera with a video tape recorder which are constructed so as to be portable. They are often called camcorders or video tape recorders (VTR). For the purposes of this application, they are referred to as video tape recorders. Present day portable video tape recorders use a video tape, usually contained within a cassette, as the recording medium. Recording is done in numerous formats, including analog BETA and VHS format, and the digital D1 format. A major disadvantage of video tape recorders is that video tape allows only linear access to a given point on the video tape. That is. if the tape has just finished recording, in order to access the beginning of a recorded session located at the beginning of the tape, the tape must be rewound.

The problem of linear access to video tape recordings is most obvious in the field of broadcast television news. Typically, a reporting crew goes to a news location with a video tape recorder and record an event. Upon completion of recording, the tape must be rewound and then played back and transmitted, for example via satellite or microwave link, to a base station in a studio facility. At the base station, the information then can be edited into a final news program.

Editing of moving pictures is commonly done digitally, using a non-linear computer-based editing system such as the Avid/1 Media Composer available from Avid Technology. Inc. of Tewksbury, Massachusetts. Such a system typically digitizes, or, converts analog video signals into a digital, computer-readable format. Even if the video signal is from a digital video tape, linear access to information on the tape still presents the same problems. Tape recording, transmission and digitization are usually performed unless there is an actual live connection from the camera to the base station. Because of the delays in rewinding, playback and transmission of recorded information from a video tape, there is typically a half hour delay between the completion of recording of an event and the time an edited version of the recorded event actually can be broadcast by the base station. This delay is a significant competitive problem in broadcast news where the time to air is very important as stations strive to produce "up to the minute" news coverage and broadcast.

Today, electronic still cameras exist which record a still image on magnetic medium, such as a floppy disk. Such a camera is described in U.S Patent No. 5,084,775, issued January 28, 1991, and assigned to Sony Corporation. However, the camera described in that patent records still images only, not full motion video images. In addition, computer video capture systems exist, such as the NuVista video capture card available from RasterOps/Truevision, Inc. Such systems, however, have not been reduced to the portable form of the present invention to perform live digital capture directly from a camera.

Additionally, it has been recently suggested by those skilled in the field of motion picture recording that numerous problems with a non-linear digital motion picture recorder are insurmountable. In particular, it has been suggested that there is a large image quality trade-off with increased recorded time capability. Additionally, it has been suggested that, using disk-based media, a little shake of the camera would cause a disk crash. Finally, it has been suggested that the disk media is substantially costlier than tape.

Another problem in previous cameras was the need to store on the video tape a portion of a test pattern, typical for about a minute at the beginning of the tape, prior to other recording. Such a test pattern allowed other equipment to correct color levels when viewing the tape. Such preparation steps may cause a videographer to miss recording an important event or cause further delays.

EP 0 617 542 A2 discloses a recording and/or reproducing apparatus in which an optical image is converted to an electric signal. This electric signal is converted into a digital signal and stored on a digital recording medium. In this conventional device the recording medium is situated outside the housing of the recording and reproducing apparatus.

### Summary of the Invention

The present invention overcomes the problems due to the linearity of the recording medium in the video recorder by replacing the analog video tape with a digital, computer-readable and writable random-access recording medium, such as a magnetic or optical disk. In one embodiment, by providing a smaller sized disk-drive, e.g. two and one-half inches in diameter, and shock and vibration isolation packaging, the risk of damage or disk failure is significantly reduced. Additionally, broadcast quality video is provided by a compressed stream of digital motion picture information at rates of four megabytes per second (4MBps). In one embodiment of this invention, the disk-based recording media records about 10 minutes of continuous video.

By providing a portable video recorder which records directly onto a digital, computer-readable and writable random-access (i.e., non-linear) medium, there is no longer any need for delays due to rewinding the tape, or for digitization of the video tape. With the advantages of non-linear recording and non-linear editing, further in combination with a non-linear broadcast system, the time to broadcast of a news event is drastically reduced. This reduction in the time to broadcast provides a significant competitive advantage for a broadcast news station.

An aspect of the present invention is set out in Claim 1.

A preferred embodiment is concerned with automatic calibration circuitry and the method of calibration performed by such circuitry. Here, the camera includes a switch which, when activated, causes the camera to generate a test pattern providing a signal including known colors, such as black and white, at known locations in the signal. In response to activation of this switch, the output of the camera is digitized by a decoder. The output of the decoder corresponding to each color is set to predetermined correct values for the color. For example, the predetermined correct values may be defined by some video color standard, such as used by the SMPTE. In a preferred embodiment, a frame of the test pattern may be stored with recorded video, such as with each recorded clip.

Another embodiment is concerned with an electrical circuit for digitizing, recording, storing and playing back a video signal. Such a circuit includes a decoder which processes the video signal to generate digital video information which is applied to a pixel bus. The pixel bus is connected to an encoder, which converts information on the pixel bus into a video signal. The pixel bus is also connected to a media data buffer and the primary media storage, such as a disk drive. A processor controls data flow from the decoder to either or both of the encoder and media data buffer and from the media data buffer to the encoder. The encoder may be connected to a viewfinder in one embodiment, or to an output connection which provides an output video signal or both. If two pixel buses are provided, with one connected to the decoder and another connected to the media data buffer, an arbitrary number of encoders may be connected to either or both of the pixel buses. In this case, it is possible to simultaneously view an input video signal using one encoder, such as from a live camera or another external source, while viewing recording video from the primary media storage.

Another embodiment is concerned with the combination of a motion video recorder which records from a camera onto a random-access medium, in combination with an editing system that allows for selection of clips recorded on the random-access medium and playback of the selected clips.

The digitized video information may be stored on a primary media storage using a form of demand-based flow control, since such digital video information does not require global synchronization. The video data written to and read from the primary storage into a media buffer is transferred to encoders and from decoders as the video data is needed. The video data may be stored as a data file according to an operating system executed by the central processing unit in the camera.

Audio data may also be recorded and played back with the video information.

An embodiment may also include a means to compress the sequence of digital images before storage on a random access medium. The compression process used may treat each frame or field in the moving picture as a self-contained entity, without reference to or reliance on previous or subsequent frames or field, to improve editing capabilities.

In another embodiment a moving picture editing system may be provided. This embodiment may also include a display and editing controls on the housing to permit editing and display of the sequence of digital images. The display may be a display screen on a side of the camera for displaying possible editing or file management functions in combination with a view finder for viewing motion picture sequences played back from the recording medium. The editing or management functions may be selectable using buttons placed adjacent to the display screen which cause the camera to perform a currently displayed function.

In another embodiment the digital recording medium of the digital motion picture recorder is a disk-type drive. In an embodiment, the disk-type drive is mounted in a separate companion housing which is detachable from the portable housing. The separate companion housing may be ruggedized.

In another embodiment the housing is in a two-part form, such that the housing is constructed to attach to a standard camera section.

### Brief Description of the Drawing

In the drawing,
Fig. 1 is a left side view of a digital motion picture recorder affixed to a video camera in accordance with the present invention;
Fig. 2 is a right side view of the digital motion picture recorder of Fig. 1;
Fig. 3 is an enlarged view of the compartment opening for receiving the recording medium of the digital motion picture recorder of Fig. 2;
Fig. 4 is a top cross-sectional view of the digital motion picture recorder of Fig. 2 illustrating a compartment for receiving a recording medium;
Figs. 5a and 5b illustrate the details of conductivity of the recording medium to the digital motion picture recorder in the compartment shown in Fig. 4;
Fig. 6 is a perspective view of the cartridge containing the recording medium;
Fig. 7 is a top view of the recording media package found inside the cartridge of Fig. 6;
Fig. 8 is a side view of the package of Fig. 7;
Fig. 9 is an end view of the package of Fig. 7;
Fig. 10 is an exploded perspective view of the recording media cartridge of Fig. 6:
Fig. 11 is a block diagram of the electronic circuitry which processes the camera and audio signals into media files for storage on a computer readable and writable random access storage medium; and
Fig. 12 is a more detailed block diagram of the block diagram of Fig. 11.

### Detailed Description

The present invention will be more completely understood through the following detailed description which should be read in conjunction with the attached drawing in which similar reference numbers indicate similar structures.

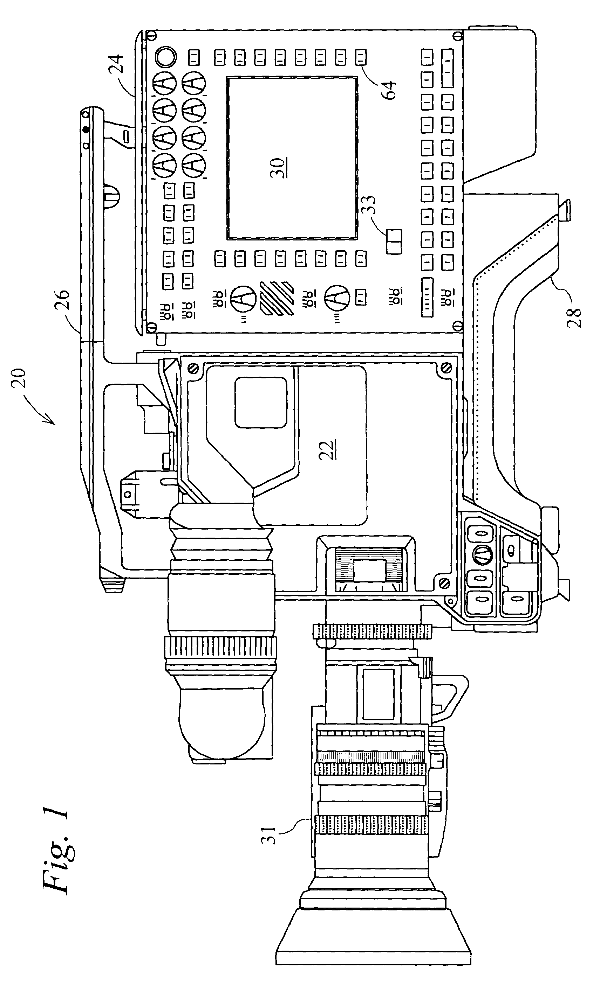

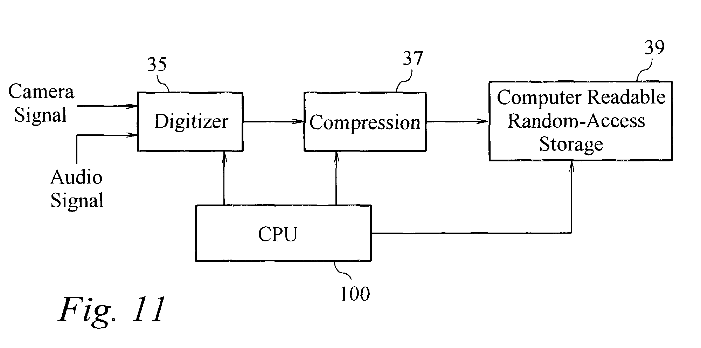

Fig. 1 shows a video camera/recorder 20 which includes a combination of a video camera 22 and a video recorder 24. The camera may be one of many types of video cameras, and may be, for example, either the HL-57 camera made by Ikegami Corporation of Japan, or the "400" camera made by the Sony Corporation of Japan. The video camera/recorder 20 also typically has a handle 26 and shoulder support 28. On the video recorder 24 of the device. typically a display 30 is used to provide the user status and other pertinent information to be detailed below. The camera, electronic circuitry (such as described below in connection with Figs. 11-12) and recording medium may be in one piece, such that the camera 22 and recorder 24 are integrated, or may be in two pieces such that the camera 22 and recorder 24 are separable from each other. Many tape-based recorders used for news reporting are in such a two-part form. and often take the shape as shown in Japanese utility model 63-9907, also referred to as 56-134889, or Japanese patent 61-187165.

The output of the video camera is generally an analog video signal. Presently known cameras available from Ikegami have a 79-line bus for the purposes of communicating with a recorder, whereas Sony cameras use a 52-line bus. The recorder of the present invention provides physical and electrical connections to interface with the Ikegami. Sony or other bus, so that the motion picture recorder of the present invention receives, using techniques known in the art, the output of the camera as if the recorder were a videocassette recorder. The motion picture recorder also includes, using techniques well known to those skilled in the art, electrical contacts and connections (not shown) to turn the camera on and off, initiate recording, etc.

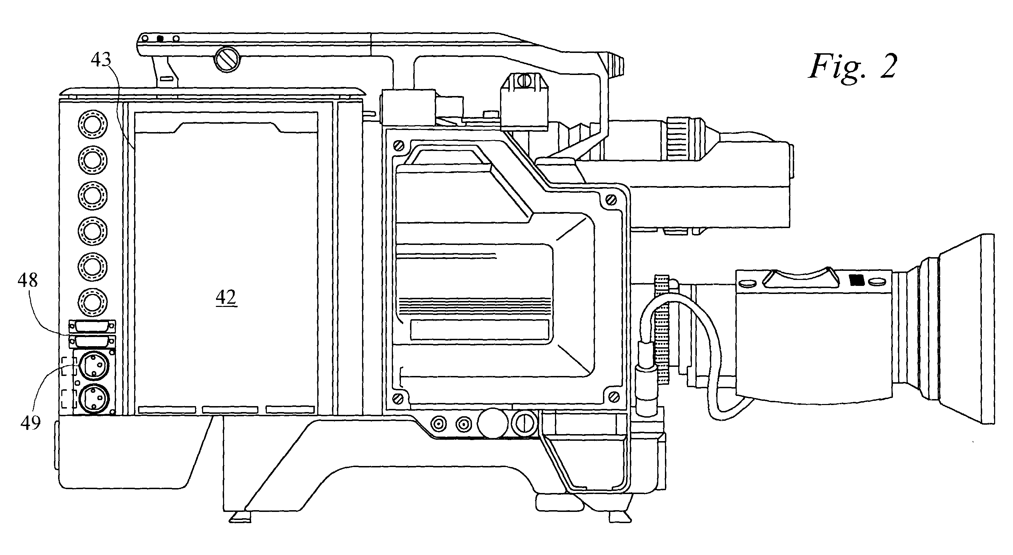

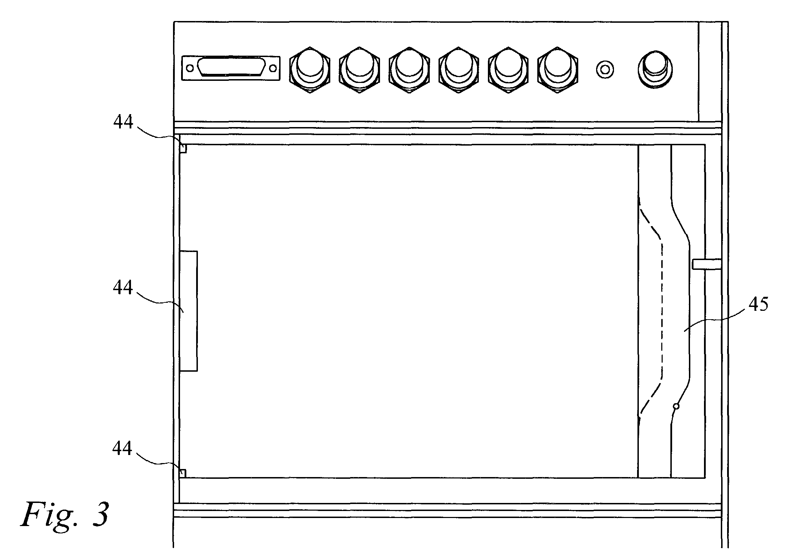

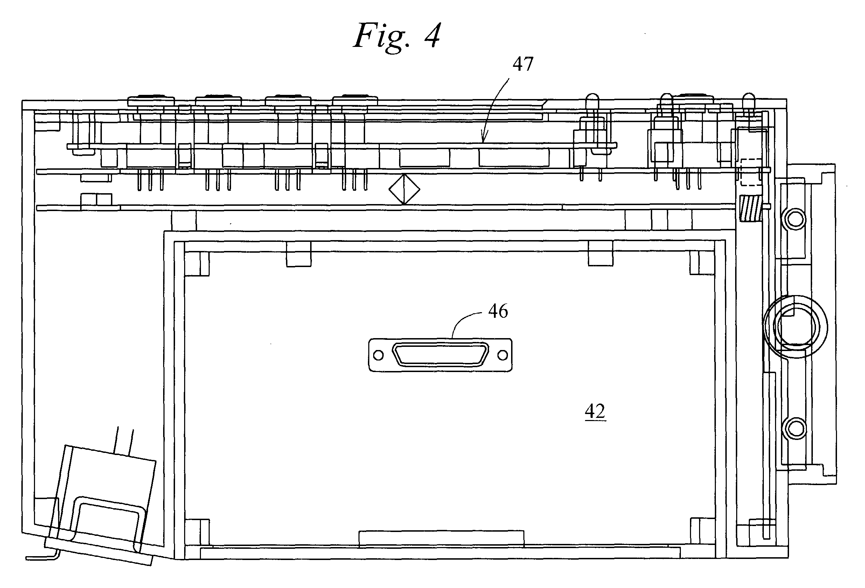

Fig. 2 shows the opposite side view of the camera shown in Fig. 1. On this side of the camera is found the recording media compartment 42 which is accessed via a door 43. External connections, such as 48 and 49, provide external video output, ETHERNET or other kinds of connections. A more detailed version of door 43 is shown in Fig. 3. It has a hinged section 44 and a handle 45 so that the door may be opened. Referring now to Fig. 4, a compartment 42 is an opening within the recorder and includes a connector 46 at the bottom of the compartment. The recording media, to be described below, connects to this connector 46 to provide electronic connection to the remainder of the circuitry of the recorder, located in area 47.

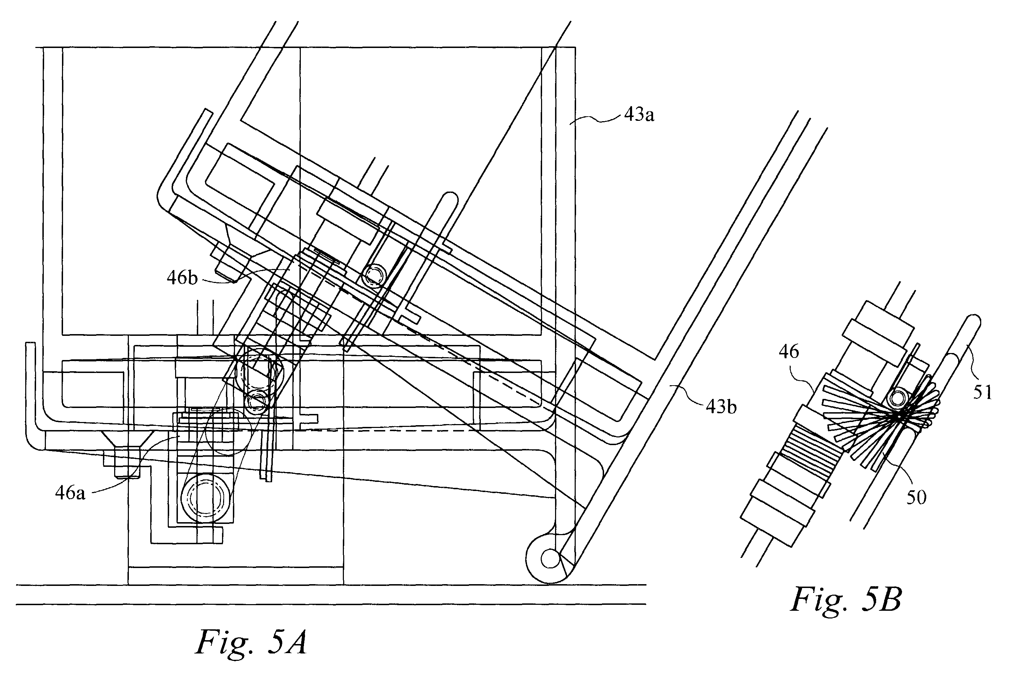

Fig. 5a shows details of the door 43 and how connection is made between the recording media and the connector 46. In Fig. 5a, the door 43a is closed and the recording media is fully engaged and connected with connector 46a. The door at 43b and connector 46b illustrate the open position at the onset or connection. Fig. 5b illustrates how a hinged protective flap 50 on the recording media rotates when a protrusion 51, near the connector 46, pushes it out of the way upon insertion of the recording media package.

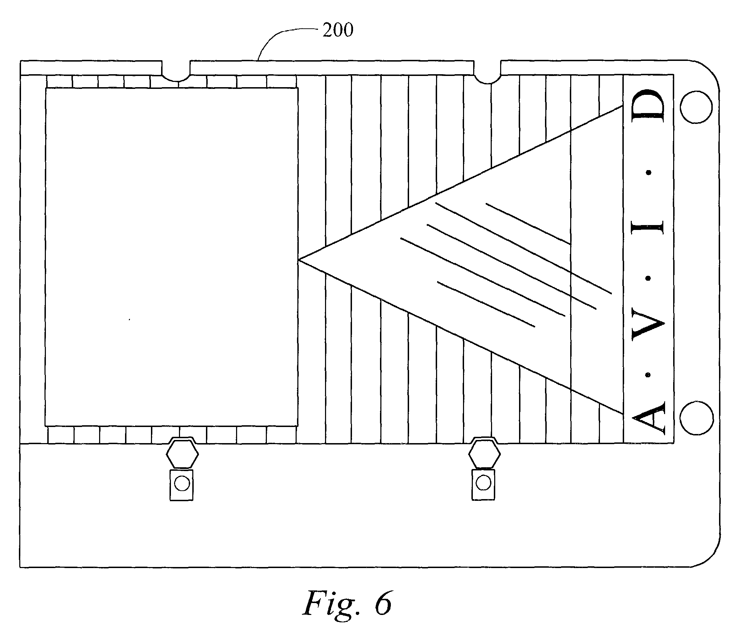

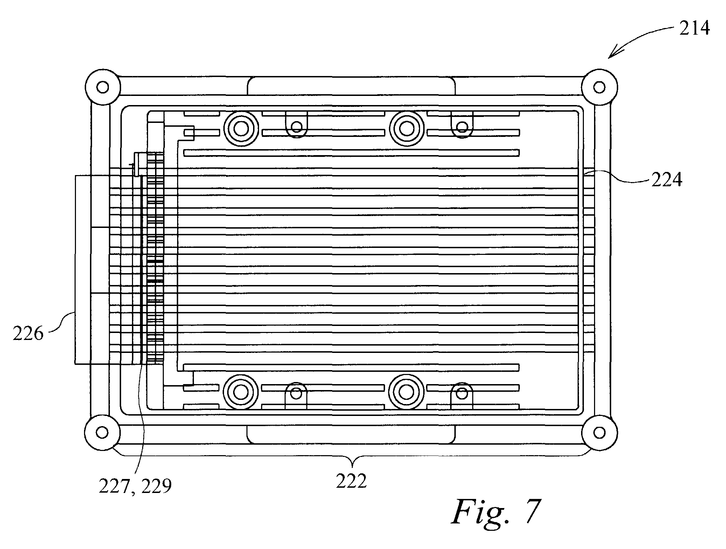

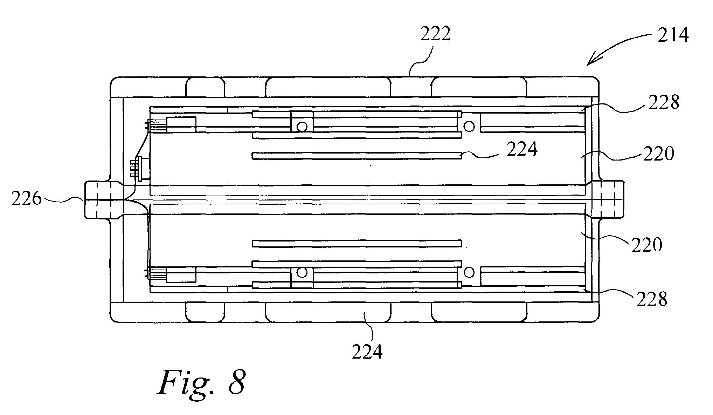

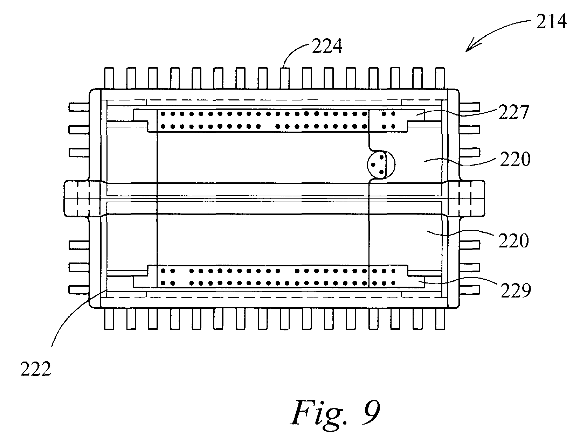

The recording media of this embodiment of the invention will now be described in connection with Figs. 6-10. Fig. 6 is an illustration of a top portion 200 of the recording media cartridge which is placed directly into the compartment 42 of the recorder. This cartridge is ruggedized for field use and typically is made of a hard plastic material. Ruggedization allows a disk drive package to withstand the rough treatments of sometimes hostile field environment in which video recorders are used. The drive package includes the use of thermally conductive material which draws excessive heat away from the package, thereby further reducing potential disk failure. To achieve this, the disk drive package is placed in a packed shell assembly which includes shock and vibration protection mechanisms for the media as well as heat dissipation materials in a manner to be described in connection with Figs. 7-10.

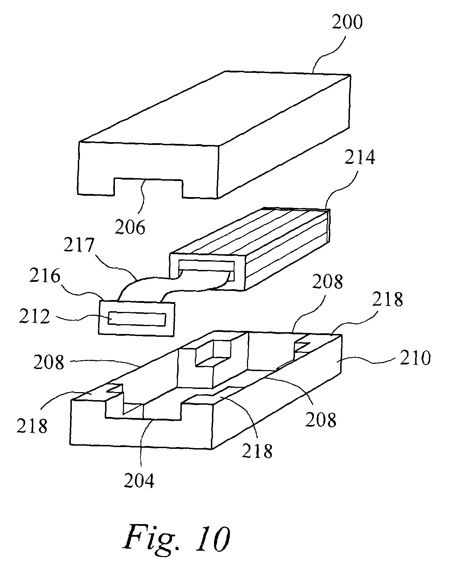

Referring now to Fig. 10, which is an exploded view of a cartridge made including the top portion 200 of Fig. 6, the cartridge has a first portion 200 and a bottom portion 210 which are adapted to meet each other along edges 208 to provide a substantially environmentally sound interconnection. A connector 212 is adapted to be placed in the notch formed by edges 206 and 204. This connector is connected to a media package 214 via a printed circuit board 216 and a ribbon cable 217. Printed circuit board 216 includes circuitry to divide an incoming data stream into two data streams to two separate media devices or to combine two outgoing data streams from the two separate media devices found in media package 214, which is described below. This division and combination is a process called striping. Each of the corners of the cartridge portions 200 and 210 is shown having shock and vibration absorbing material 218 which may be a material bearing the product name called SORBATHANE, available from Sorbathane, of Kent, Ohio. Such a material is a polyurethane elastomer such as described in U.S. patent nos. 4,346,205, 4,476,258, 4,777,739, and 4,808,469. The material 218 is formed in a shape that holds each of the comers of the media package 214, to absorb shocks and vibration.

Figs. 7, 8 and 9 are top, side and end views, respectively, of the media package 214.

Referring to Figs. 7-9, two disk drives 220 are combined to form one media package 214. The disk drives 220 may have a thin thermally conductive pad to direct heat away from the disk drives 220. In the media package, disk drives 220 are enclosed in a heat sink package 222. Heat sink fins 224 are provided on the top, bottom, side and end faces of the package. A connector 226 provides connection to the ribbon cable 217. This connector connects to connectors 227 and 229 on the disk drives 220.

The disk drives 220 (and associated signal processing circuitry) should be able to record video and audio data streams at sustained rates of typically four (4) megabytes per second (MBps). The TravelStar LP disk drive, having a diameter of 2 ½ inches and a capacity of 720MB is available from IBM Corporation of Yorktown Heights, New York. Disk drives of increased capacity increase the possible recording time of the device. Two disk drives are combined to form the media package 214. Of course, instead of a magnetic disk drive, any number of other types of digital random-access storage media may be used, such as optical drives, magneto-optical drives, DRAMs, flash memories, etc.

The disk drives 220 may be self-contained and include electrical contacts for connection to mating contacts in chamber 42 which serve to provide power to the disk drive, facilitating read/write functions and performing other related functions.

Having now described the mechanical structure of one embodiment of the motion picture recorder of this invention, the electronic circuitry for processing the motion pictures will now be described. The output of the video camera 22, which is generally an analog signal, is provided to the digitizing electronic circuitry such as shown in Figs. 11-12. The circuity includes a digitizer 35, compression circuitry 37, and a computer-readable and writable random-access recording medium 39, such as a disk drive, as described above. While the digitizer 35 is used for those video cameras which produce an analog output signal, the digitizer would be unnecessary if the output of the video camera were to be digital. In some prior art systems, the images captured by the camera lens 31 of Fig. 1 is impressed upon a charge coupled device (CCD), well known to those skilled in the art. The CCD produces an electrical signal. which is then processed (either digitally or with analog circuitry) to create either an analog video signal so that those signals may be passed to a conventional analog video cassette recorder. A digital video signal or a digital video information stream may be input directly to the compression circuitry 37 of Fig. 11, eliminating the digital-to-analog and analog-to-digital conversions associated with prior art devices from the circuitry within the camera 22.

However, to interface a recorder with presently existing analog output video cameras. the digitizer 35 is used. The digitizer may comprise a number of analog to digital (A/D) converters. These converters, well known to those skilled in the art, may accept the output of the analog video camera, and may comprise on A/D converter for each component Y, Cv and Cb signal from the video camera. Analog composite video may also be decoded into digital video data. Digital video may also be processed and synchronization signals may be removed to provide digital video information. A 4:2:2 format is typically used, but 4:1:1 and 4:4:4 formats may also be used. Other color formats may be used such as CMYK. HSI and RGB in 8, 16 or 32 bits formats. However, the Y, Cr, Cb format is preferable for use with the well known Joint Photographer's Expert Group (JPEG) compression standard, which may be used in this motion picture recorder. Other compression standards, well known in the art, such as MPEG. may also be suitable for use in the present invention. However, the use of JPEG compression simplifies editing because it does not rely on relationships of adjacent frames or fields, but instead each frame or field is self-contained. The audio signal is also digitized from a microphone. Digitization is unnecessary if a digital microphone is used. Digitizing and compression/decompression circuitry is described in U.S Patents 5,355,450, 5,045,940 and published Patent Cooperation Treaty (PCT) applications WO93/12481 and WO93/12613.

One difference between the systems described in the above patents and published applications and an embodiment of the present invention is that this embodiment does not require a frame grabber or frame buffer. The frame buffer is eliminated to reduce power consumption. which is desirable with a portable, battery-powered system. Its removal is possible by using a high throughput compression circuit such as the ZR36050 and ZR36015 JPEG compression circuits, available from Zoran of Santa Clara, California. These circuits provide full 60 field per second uncompressed data rates for 720 X 480 digital still images, which provides broadcast quality images. Due to the high throughput compression circuit, the compression circuitry of this embodiment does not require any stalling or metering mechanism for delaying processing of data through this pipeline. Other circuits are available for JPEG compression, such as from LSI Logic.

In order to maintain correct color of the captured images from the video camera, the signals from the camera may be calibrated to match well known and established SMPTE digital video color standards. In the absence of such calibration, the compression circuitry of one embodiment of the invention, based on the well known and established JPEG compression standard, may create errors because JPEG compression relies on frequencies derived from the colors present in the signal. Calibration is done automatically in response to actuation of a calibration selection switch 33 on the video recorder of Fig. 1. Such calibration typically is performed both periodically during use and whenever a camera is associated with new calibration and digitizing circuitry.

Calibration is performed by causing the camera to generate a reference signal. A commonly-used reference signal is known as "color bars" or a "test pattern." The test pattern for any given camera is in a predetermined format and is typically generated by the camera circuitry in a known manner. Using this format, the overall signal level or the color bar signal is determined by the recorder, and thus the values output by the camera and, by inference, the CCD device are determined. These values are then mapped, using well known mapping techniques, to the SMPTE standard for digital color representations, of which an indication is stored in the recorder. More precisely, the A/D converters in the digitization process, described below, are adjusted so that the analog level output in the reference signal are translated to the corresponding SMPTE digital value. By creating this mapping in a deterministic way, the camera is thus forced into providing a SMPTE compliant digital video information. It is therefore no longer necessary to record color bars as is common with video tape. It may, nonetheless, be preferable to store a single frame of color bars digitally in connection with each recorded clip of compressed video.

These components shown in Fig. 11 as well as overall camera and recorder control operate under the control of a central processing unit (CPU) 100, such as the MC68341, available from Motorola, Inc., which runs under control of a real-time operating system such as the VXWorks operating system available from Wind River Systems of Alameda, California.

Management of media files and the disk controller may be performed by any number of known techniques, including that disclosed in U.S. Patent No. 5,267,351, assigned to Avid Technology and as disclosed in published PCT application WO 93/21636. Data files are in the DOS file format, supplemented by a media file format known as the Open Media Framework (OMF), defined in the OMF Interchange Specifications available from Avid Technology and available in the OMF Interchange Toolkit, also available from Avid Technology.

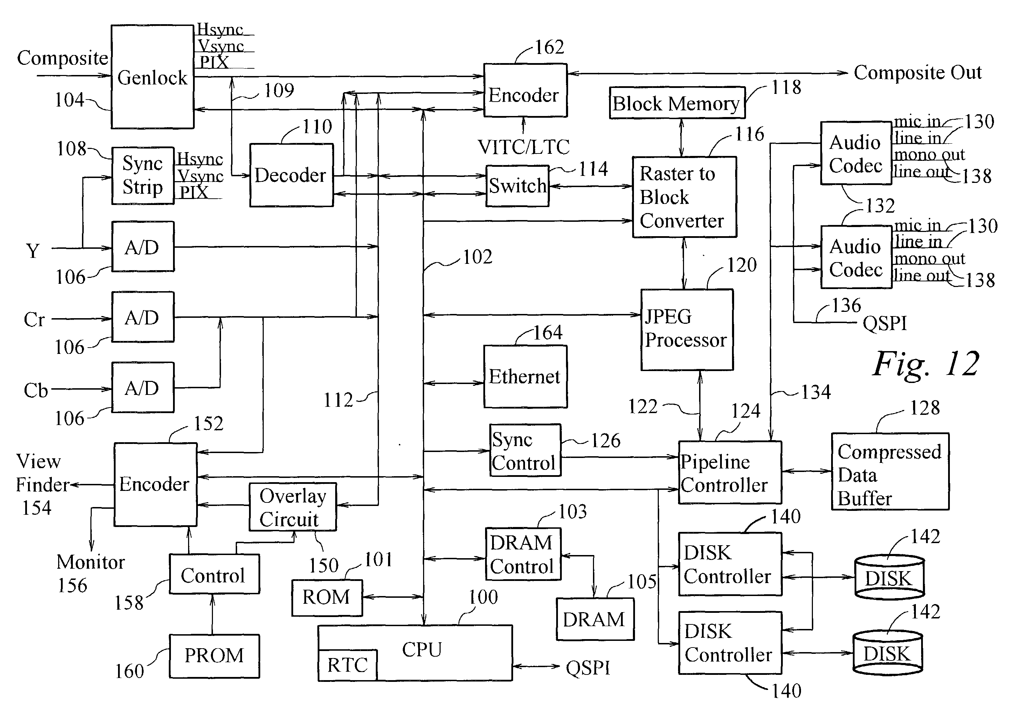

A more detailed block diagram of the circuitry shown in Fig. 11 will now be described in connection with Fig. 12. As described above, the digitizing circuitry is controlled by a central processing unit 100, such as the Motorola MC68341 processor, running a real-time operating control system. The central processing unit 100 has a main address and data bus 102 to which other parts of the system are connected.

Digitizing circuitry includes a GENLOCK circuit 104, which processes composite video signals, and a set of analog-to-digital converters 106, associated with a synchronization signal stripping circuit 108, which processes component video signals into a YUV 4:2:2 format digital signal. The composite video signal output by the GENLOCK circuit 104 is provided to a decoder 110. which converts it into a digital component information, similar to that output by the analog-to-digital converters 106. The horizontal synchronization signal (HSYNC). vertical synchronization signal (VSYNC). and the pixel clock (PIX) are used to synchronize the rest of the circuit. The composite signal is provided along a bus 109 to a decoder 110 which translates it into a YUV 4:2:2 digital component signal. The composite signal is also directed to encoder 152.

The component digital signals are applied to a pixel bus 112 which directs them through a switch 114, such as a multiplexer, to a raster block converter 116 and memory 118. which generates picture blocks from the serial pixel data for use and processing according to the JPEG compression standard described above. The memory 118 typically has a size of 32Kx16. The transfer of pixel data to the raster block converter 116 bypasses the central processing unit (CPU) 100, i.e., pixel data is not written to the CPU's main memory 105. A JPEG processor 120 interacts with the raster block converter 116 and memory 118 to take a digital still image obtained from the pixel data and compresses it using the JPEG compression standard to provide an output as indicated at 122. The JPEG compression may be adaptive to provide improved image quality while maintaining good compression levels in accordance with the teachings of U.S. patent 5,355,450.

As to audio signals inputted, a microphone or line-in signal indicated at 130 is applied to one or more audio coder and decoders (CODEC) 132 which provide a serial digital output 134. The coders are not necessary if the input signal is digital, such as from a digital microphone, digital audio tape. compact disc or other digital source, or if the output signal is digital. The sampling rate may be any desired rate, but typical rates for audio include 44.1KHz, 22KHz and 48KHz. 8, 16 or 32-bit formats may be used, among others. It should be understood that the invention is not limited to any particular digital audio format. Additionally, they may receive digital input via the QSPI bus 136 to convert them to analog output signals at 138. The serial audio data 134 and the compressed video data 122 are applied to a pipeline control circuit 124. The pipeline control circuit 124 is controlled using synchronization control information from a synchronization controller 126 to direct the data into a compréssed data buffer 128 typically implemented as a dynamic RAM. A suitable size for this buffer is 2Mx32 and it is typically implemented logically as a ring buffer. The pipeline control circuit is implemented in accordance with the teachings of U.S. Patent 5,045,940 and PCT publication WO 93/12481. The CPU 100 controls synchronization controller 126, pipeline control circuit 124 and disk controllers 140 to direct the flow of the video and audio data between memory 128 and the disk storage 142. Two disk controllers are used for performing conventional striping. However, one controller may be used to send commands to circuitry on the drive package, as shown at 216 in Fig. 10, which divides an incoming stream or combines an outgoing stream of data in response to commands from a single disk controller 140. Striping may be performed at the word level, or at block or byte levels. The disk controllers and associated bus to the disk may be either IDE or SCSI controllers, or comply with some other standard. It should be understood that the invention is not limited to the type of disk controller.

The pipeline controller provides a form of local synchronization using demand-based flow control of the media data between the encoders and decoders and the computer-readable storage. The movement of data on the pixel bus is through the compressed data buffer and to the storage is intermittent, but has an average flow that is comparable to the continuous. synchronized flow of a video signal. This flow control accommodates for statistical variations in flow due to disk accesses, memory management and other impact on the flow due to the other operating system activities. The flow control ensures that an encoder receives data when the data is needed and that data is read from a decoder without being dropped. An additional benefit of using flow-controlled media data is that no pre-roll time is needed to lock to an incoming source or to lock to an output frequency and phase.

This system may also be provided with the capability of providing an output video signal generated from the digitized video signal. For example, the pixel bus 112 may be connected to an overlay circuit 150. The output of the overlay circuit 150 and the composite signal 109 may be provided to an encoder 152. The output of the encoder may be provided back to the camera which has an input for the view finder 154. Additionally, this signal may be provided to monitor 156. In one embodiment of the invention, the camera's view finder 154 receives a signal not only from the camera, but also from an alternate source. Using this capability, the motion picture recorder may have a controller 158 and an associated memory 160 which may provide additional status information via the view finder in connection with the video being recorded. Such status information may be an indication of battery level, time codes, time of day, function performed (e.g., recording or playback), etc.

The central processing unit 100 also has associated with it a programmable read-only memory, such as a flash memory 101, in which program information is stored and a dynamic RAM controller 103 and dynamic RAM 105, which are common in the art, for storing volatile data while processing. Typically the memory 101 contains an operating system and other programming code which is kept in non-volatile storage. A suitable size for this memory 101 is 4M. A suitable DRAM size is 4Mx16.

The moving picture recorder may also include an additional encoder 162 which provides a composite-out video signal with VITC/LTC control information. The input to the encoder may be anyone of the pixel bus 112, the output of decoder 110, bypassing pixel bus 112, the output of AID converters 106, bypassing pixel bus 112 or the output 109 of genlock circuit 104. Alternatively, each of these inputs may be applied to its own separate encoder. The outputs of these encoders may be fed to a simple switch allowing for the selection of one of these outputs. Additionally, an ETHERNET connection 164 may also be provided.

In one embodiment of the invention, two pixels buses 112 may be used. The first bus is the record bus which connects to the outputs of the decoders 110 and 106, and to the inputs of the JPEG compression circuitry, via the input side of the switch 114 to the raster-to-block converter 116, and the encoders 162 and 152. The second bus is the playback bus which connects to the output of the JPEG decompression circuitry, via the output side of the switch 114 and the inputs of encoders 162 and 152.

In one embodiment of this invention, the GENLOCK circuit 104 may be a Raytheon 22071 GENLOCK circuit. The decoder 110 may be a Raytheon SAA7151 decoder. The encoders 152 and 162 may also be either a Raytheon or TRW 22191 full video encoder. The ETHERNET circuit, audio modules and disk controller are available in a variety of forms and are available from a number of suppliers.

Because the recording media in this system allows for direct computer access, being already in a different format, the media package containing the hard drives, described above, can be simply removed from the recorder 24 and connected directly to a computer system which may be used to edit or broadcast the recorded video, such as the Avid Media Composer, Avid News Cutter, and Avid AirPlay Systems, all of which are available from Avid Technology, Inc. of Tewksbury, Massachusetts. The disk drive package is of an external physical shape and electrical connection configuration to facilitate its insertion into a suitable "docking station" on the above computer systems. This facility greatly reduces the time from videography to broadcast over prior art techniques described above.

The display 30 shown in Fig. 1 provides further advantages over the prior art. In prior art recorders, the linear recorder performs the function of recording and perhaps playback of the material recorded on the single videocassette in the system. Editing of the material must be delayed until the videocassette is mounted in an analog video editor, or, more recently, a non-linear video editor after the video material has been digitized. One aspect of the present invention provides a digitized, compressed-form material which may be readily edited. The recorder of Fig. 1 may contain an editing system, such as the editing system described in U.S. Patent 5,267,351 and PCT published application WO93/21636, the disclosure of which is incorporated by reference herein. The editing system is also described in U.S. Patent Application Serial No. 08/418,948, filed April 7, 1995 and incorporated by reference herein. The inclusion of the editing system allows a user to edit the video material recorded at the recording site, even prior to, or in lieu of, editing in a studio. This is particularly advantageous if the material must be broadcast immediately. Therefore, the video and audio signals may be recorded, edited and broadcast from the field in a very short period of time. During editing, information is played back through the digital video pipeline through either the view finder or other display. During editing it is possible to display video through an external video port, or to have the external video port transmit live video. The arrangement of a variety of video inputs and outputs provides switching capabilities in the camera similar to those found in a television broadcast studio.

The recorder 24 also may include a number of pressure-sensitive or other suitable controls 64 well known to those skilled in the art and used, for example, in automatic teller machines and consumer-oriented camcorders, to provide recording and edit functions for the material displayed on display 30. The display 30 may be of a LCD or other suitable thin panel type.

Having now described a few embodiments of the invention, it should be apparent to those skilled in the art that the foregoing is merely illustrative and not limiting, having been presented by way of example only. Numerous modifications and other embodiments are within the scope of one of ordinary skill in the art.

For example, digital-to-analog conversion circuitry may be eliminated from the camera because processing of analog signals is no longer necessary.

Additionally, although the media package is described herein as removable, it need not be removable. Additionally, disk drives may be external to the camera, for example, in a rack mount. Rather than record to disk, an output may be directed to a computer network, such as an ATM network, or a transmitter, such as a cellular, satellite, or microwave or phone link. By providing removable disk drives, a disk drive becomes filled with recorded video material, a new, empty disk drive can be inserted to replace the filled drive, similar to replacement of a video tape. It is also possible to have two hard disk drive packs, and thus two receptacles in the video recorder 24 of the type shown in Figs. 3 and 4. With such a system, continuous recording from one disk drive to the next can enable an indefinite amount of time to be recorded without loss of information due to switching of recording media.

These and other modifications are contemplated as falling within the scope of the invention as defined by the appended claims.

## Claims

1. A digital motion picture recorder (20), comprising:
a housing constructed to be portable for use by an individual;
a motion picture camera (22) mounted in the housing, and providing a broadcast quality motion video signal as an output;
means (35), mounted in the housing, for converting the broadcast quality motion video signal into a sequence of digital still images;
**characterised in that**
the recorder further includes within the housing
a digital, computer-readable and writable random-access medium (39) connected to receive and store the sequence of digital still images in a computer-readable file format; and
means for reading at least a portion of the sequence of digital still images from the random-access medium (39) mounted in the housing to generate a broadcast quality motion video signal therefrom.

2. The digital motion picture recorder of Claim 1, further comprising a means to compress the sequence of digital still images which are received by the random access medium.

3. The digital motion picture recorder of Claim 1, further comprising a motion picture editing system within the housing.

4. The digital motion picture recorder of Claim 3, further comprising a display and editing controls on the housing to edit and display the sequence of digital still images.

5. The digital motion picture recorder of Claim 1, wherein the digital medium comprises a disk-type drive.

6. The digital motion picture recorder of Claim 5, wherein the disk-type drive is mounted in a disk drive housing detachable from the portable housing.

7. The digital motion picture recorder of Claim 6, wherein the disk drive housing is ruggedized.

8. The digital recorder of Claim 1, further including means for calibrating the motion picture signal to a digital video color standard.

9. The digital motion picture recorder of Claim 1, further including an electronic circuit for automatic calibration of a motion video signal to a digital colour standard, comprising:
a source of a motion video signal;
a selectable source of a test pattern having predetermined colours at predetermined locations therein generated according to characteristics of the video signal source;
a decoder for converting the motion video signal to the sequence of digital still images, wherein the sequence of digital still images conforms to the digital colour standard;
means for setting a mapping in the decoder of motion video signal levels to colour levels in the digital colour standard according to the test pattern in response to a selection of the source of the test pattern.

10. The digital motion picture recorder of Claim 9, further comprising:
means for recording the sequence of digital still images as a computer readable data file on the digital computer readable and writable random access medium; and
means for storing a frame of the test pattern in association with the data file.

11. The digital motion picture recorder of Claim 1, wherein the means for converting further comprises:
a decoder for receiving the motion video signal from the motion video camera and for generating a corresponding stream of digital video information representing the sequence of digital still images;
a pixel bus connected to the decoder for communicating the stream of digital video information;
an encoder for receiving the stream of digital video information and for generating a corresponding output motion video signal;
a media pipeline including a media buffer and a computer-readable medium connected to the pixel bus and for reading and writing a stream of digital video information to and from the pixel bus; and
a processor for controlling data flow on the pixel bus by controlling the media pipeline, the encoder and the decoder.

12. The digital motion picture recorder of Claim 11, further comprising a viewfinder connected to display the output motion video signal, and wherein the processor directs the stream of digital video information to the encoder and the media pipeline substantially simultaneously.

13. The digital motion picture recorder of Claim 12 further comprising means for receiving audio information and for directing the audio information to the media pipeline.

14. The digital motion picture recorder of Claim 1, further comprising:
a display on the housing for displaying presently selectable editing operations; and
controls on the housing and adjacent the display for allowing a user to select a displayed editing operation.

15. The digital motion picture recorder of Claim 1, further comprising:
a display on the housing for displaying presently selectable file management operations; and
controls on the housing and adjacent the display for allowing a user to select a displayed file management operation.

## Patentansprüche

1. Digitales Bewegtbild-Aufzeichnungsgerät (20), das folgendes umfasst:
ein Gehäuse, das aufgebaut ist, um für die Verwendung durch eine Person tragfähig zu sein,
eine Bewegtbildkamera (22), die auf dem Gehäuse montiert ist und die ein Bewegtbild-Videosignal in Sendequalität an ihrem Ausgang bereitstellt;
eine Einrichtung (35), die in dem Gehäuse montiert ist, um das Bewegtbild-Videosignal in Sendequalität in eine Sequenz von digitalen Standbildern zu konvertieren;
**dadurch gekennzeichnet, dass**
der Rekorder weiter innerhalb des Gehäuses ein digitales, computerlesbares und beschreibbares Medium (39) mit wahlfreiem Zugriff beinhaltet, das angeschlossen ist, um die Sequenz von digitalen Standbildern in einem computerlesbaren Dateiformat zu empfangen und zu speichern; und
eine Einrichtung, um wenigstens einen Abschnitt der Sequenz von digitalen Standbildern aus dem Medium (39) mit wahlfreiem Zugriff zu lesen, das in dem Gehäuse montiert ist, um ein Bewegtbild-Videosignal in Sendequalität daraus zu erzeugen.

2. Digitales Bewegtbild-Aufzeichnungsgerät nach Anspruch 1, das weiter eine Einrichtung umfasst, um die Sequenz von digitalen Standbildern zu komprimieren, die von dem Medium mit wahlfreiem Zugriff empfangen werden.

3. Digitales Bewegtbild-Aufzeichnungsgerät nach Anspruch 1, das weiter ein Bewegtbild-Bearbeitungssystem innerhalb des Gehäuses umfasst.

4. Digitales Bewegtbild-Aufzeichnungsgerät nach Anspruch 3, das weiter eine Anzeige und Bearbeitungssteuerungen auf dem Gehäuse umfasst, um die Sequenz von digitalen Standbildern zu bearbeiten und anzuzeigen.

5. Digitales Bewegtbild-Aufzeichnungsgerät nach Anspruch 1, bei welchem das digitale Medium ein Laufwerk vom Disk-Typ bzw. Platten-Typ umfasst

6. Digitales Bewegtbild-Aufzeichnungsgerät nach Anspruch 5, bei welchem das Laufwerk vom Disk-Typ bzw. Platten-Typ in einem Disk-Laufwerkgehäuse bzw. Plattenlaufwerkgehäuse montiert ist, das von dem tragbaren Gehäuse abnehmbar ist.

7. Digitales Bewegtbild-Aufzeichnungsgerät nach Anspruch 6, bei welchem das Disklaufwerkgehäuse bzw. Plattenlaufwerkgehäuse gegen rauhe Behandlung unempfindlich gemacht worden ist.

8. Digitales Aufzeichnungsgerät nach Anspruch 1, das weiter eine Einrichtung enthält, um das Bewegtbildsignal auf einen digitalen Videofarbstandard bzw. eine digitale Videofarbnorm zu kalibrieren.

9. Digitales Bewegtbild-Aufzeichnungsgerät nach Anspruch 1, das weiter eine elektronische Schaltung enthält, um automatisch ein Bewegtbild-Videosignal auf einen digitalen Farbstandard bzw eine digitale Farbnorm zu kalibrieren, und weiter folgendes umfasst:
eine Quelle eines Bewegtbild-Videosignals;
eine auswählbare Quelle eines Testmusters, das vorbestimmte Farben an vorbestimmten Stellen darin aufweist, die gemäß Charakteristiken der Videosignalquelle erzeugt sind;
einen Dekoder, um das Bewegtbild-Videosignal in eine Sequenz von digitalen Standbildern zu konvertieren, wobei die Sequenz von digitalen Standbildern den digitalen Farbstandard bzw. die digitale Farbnorm erfüllt bzw. damit übereinstimmt;
eine Einrichtung, um eine Abbildung bzw. Zuordnung in dem Dekoder von Bewegtbild-Videosignalpegeln auf bzw. zu Farbpegeln in dem digitalen Farbstandard bzw. in der digitalen Farbnorm gemäß dem Testmuster in Antwort auf eine Auswahl der Quelle des Testmusters einzustellen.

10. Digitales Bewegtbild-Aufzeichnungsgerät nach Anspruch 9, das weitere folgendes umfasst:
eine Einrichtung, um die Sequenz von digitalen Standbildern als eine computerlesbare Datendatei auf dem digitalen computerlesbaren und beschreibbaren Medium mit wahlfreiem Zugriff aufzuzeichnen; und
eine Einrichtung, um einen Rahmen bzw, ein Vollbild des Testmusters in Zusammenhang mit der Datendatei bzw, damit zusammenhängend zu speichern.

11. Digitales Bewegtbild-Aufzeichnungsgerät nach Anspruch 1, bei welchem die Einrichtung zum Umwandeln weiter folgendes umfasst:
einen Dekoder, um das Bewegtbild-Videosignal von der Bewegtbild-Videokamera zu empfangen und um einen entsprechenden Strom von digitaler Videoinformation zu erzeugen, die die Sequenz von digitalen Standbildern darstellt;
einen Pixelbus, der mit dem Dekoder verbunden ist, um den Strom von digitaler Videoinformation zu kommunizieren bzw. zu übermitteln;
einen Enkoder, um den Strom von digitaler Videoinformation zu empfangen und um ein entsprechendes Ausgangs-Bewegtbild-Videosignal zu erzeugen;
eine Medienpipeline bzw. einen Medienkanal, die bzw. der einen Medienpuffer und ein computerlesbares Medium enthält, das mit dem Pixelbus verbunden ist, und dazu dient einen Strom von digitaler Videoinformation zu den Pixelbus zu schreiben und davon zu lesen; und
einen Prozessor, um den Datenfluss auf dem Pixelbus zu steuern, indem die MedienPipeline bzw. der Medienkanal, der Enkoder und der Dekoder gesteuert wird.

12. Digitales Bewegtbild-Aufzeichnungsgerät nach Anspruch 11, das weiter einen Sucher umfasst, der angeschlossen ist, um das ausgegebene Bewegtbild-Videosignal anzuzeigen, und wobei der Prozessor den Strom digitaler Videoinformation zu dem Enkoder und der Medienpipeline im wesentlichen gleichzeitig leitet.

13. Digitales Bewegtbild-Aufzeichnungsgerät nach Anspruch 12, das weiter eine Einrichtung umfasst, um Audioinformation zu empfangen und um die Audioinformation zu der Medienpipeline zu führen bzw. zu leiten.

14. Digitales Bewegtbild-Aufzeichnungsgerät nach Anspruch 1, das weiter folgendes umfasst:
eine Anzeige auf dem Gehäuse, um gegenwärtig auswählbare Editieroperationen anzuzeigen; und
eine Steuerung auf dem Gehäuse und benachbart zu der Anzeige, um es einen Benutzer zu erlauben, eine angezeigte Editieroperation bzw. Bearbeitungsoperation auszuwählen.

15. Digitales Bewegtbild-Aufzeichnungsgerät nach Anspruch 1, das weiter folgendes umfasst:
eine Anzeige auf dem Gehäuse, um gegenwärtig auswählbare Dateimanagementoperationen anzuzeigen; und
eine Steuerung auf dem Gehäuse und benachbart zu der Anzeige, um es einem Benutzer zu erlauben, eine angezeigte Dateimanagementoperation auszuwählen.

## Revendications

1. Dispositif d'enregistrement numérique d'images animées (20), comprenant:
un boîtier agencé de manière à être portable pour être utilisé par un individu;
un caméra à images animées (22) montée dans le boîtier et fournissant un signal vidéo d'image ayant la qualité de diffusion en tant que signal de sortie;
des moyens (35), montés dans le boîtier, pour convertir le signal vidéo animé ayant la qualité de diffusion en une séquence d'images numériques fixes;
**caractérisé en ce que**
le dispositif d'enregistrement comporte en outre, à l'intérieur du boîtier,
un support numérique à accès direct (39), lisible et enregistrable par ordinateur et connecté de manière à recevoir et mémoriser la séquence d'images numériques fixes dans un format de fichier lisible en ordinateur; et
des moyens pour lire au moins une partie de la séquence d'images fixes numériques à partir du support à accès direct (39), monté dans le boîtier pour produire, à partir de là, un signal vidéo d'images animées ayant la qualité de diffusion.

2. Dispositif d'enregistrement numérique d'images animées selon la revendication 1, comprenant en outre des moyens pour comprimer la séquence d'images fixes numériques qui sont reçues par le support à accès direct.

3. Dispositif d'enregistrement numérique d'images animées selon la revendication 1, comportant en outre un système d'édition d'images animées situé à l'intérieur du boîtier.

4. Dispositif d'enregistrement numérique d'images animées selon la revendication 3, comprenant en outre des moyens de commande d'affichage et d'édition installés dans le boîtier pour éditer et afficher la séquence d'images fixes numériques.

5. Dispositif d'enregistrement numérique d'images animées selon la revendication 1, dans lequel le support numérique comprend une unité d'entraînement du type à disque.

6. Dispositif d'enregistrement d'images animées numériques selon la revendication 5, dans lequel l'unité d'entraînement du type à disque est montée dans un boîtier d'unité de disque, qui est détachable du boîtier portable.

7. Dispositif d'enregistrement d'images animées numériques selon la revendication 6, dans lequel le boîtier de l'unité de disque est renforcé.

8. Dispositif d'enregistrement numérique d'images animées selon la revendication 1, comprenant en outre des moyens pour étalonner le signal d'image animé sur un standard de couleurs vidéo numérique.

9. Dispositif d'enregistrement numérique d'images animées selon la revendication 1, comprenant en outre un circuit électronique servant à réaliser l'étalonnage automatique d'un signal vidéo d'images animées sur un standard de couleurs numérique, comprenant:
une source de signal vidéo d'image animée;
une source pouvant être sélectionnée dans un profil de test possédant des couleurs prédéterminées en des emplacements prédéterminés produits en fonction de caractéristiques de source du signal vidéo;
un décodeur pour convertir le signal vidéo d'image animée en la séquence d'images fixes numériques, la séquence d'images fixes numériques étant conforme au standard de couleurs numérique;
des moyens pour la mise en correspondance dans le décodeur, de niveaux du signal vidéo d'image animée sur des niveaux de couleurs dans le standard de couleur numérique conformément au profil de test en réponse à une sélection de la source du profil de test.

10. Dispositif d'enregistrement numérique d'images vidéo selon la revendication 9, comprenant en outre:
des moyens pour enregistrer la séquence d'images vidéo fixes numériques sous la forme d'un fichier de données lisible par ordinateur dans le support numérique d'accès direct lisible et enregistrable par ordinateur; et
des moyens pour mémoriser une trame du profil de test en association avec le fichier de données.

11. Dispositif d'enregistrement numérique d'images animées selon la revendication 1, dans lequel les moyens de conversion comprennent:
un décodeur pour recevoir le signal vidéo d'images animées depuis la caméra vidéo d'images animées et pour produire un flux correspondant d'informations vidéo numériques représentant la séquence d'images fixes numériques;
un bus de transmission de pixels connecté au décodeur pour communiquer le flux d'informations numériques; et
un codeur pour recevoir le flux d'informations vidéo numérique et produire un signal vidéo de déplacement de sortie correspondant;
un pipeline de supports incluant un tampon de supports et un support lisible par ordinateur, connecté au bus de transmission de pixels et servant à lire et écrire un flux d'informations vidéo numériques dans et à partir du bus de transmission de pixels; et
un processeur pour contrôler un flux de données dans le bus de transmission de pixels par commande du pipeline de supports, le codeur et le décodeur.

12. Dispositif d'enregistrement numérique d'images animées selon la revendication 11, comprenant en outre un viseur connecté pour afficher le signal vidéo d'images animées de sortie, et dans lequel le processeur dirige d'une manière sensiblement simultanée le flux de l'information vidéo numérique en direction du codeur et du pipeline de supports.

13. Dispositif d'enregistrement numérique d'images animées selon la revendication 12, comprenant des moyens pour recevoir une information audio et pour diriger l'information audio vers le pipeline de supports.

14. Dispositif d'enregistrement numérique d'images animées selon la revendication 1, comprenant en outre :
un dispositif d'affichage sur le boîtier pour afficher des opérations d'édition pouvant être présentement sélectionnées; et
des commandes disposées sur le boîtier et au voisinage du dispositif d'affichage pour permettre à un utilisateur de sélectionner une opération d'édition affichée.

15. Dispositif d'enregistrement numérique d'images animées selon la revendication 1, comprenant en outre:
un dispositif d'affichage fixé sur le boîtier pour afficher des opérations de gestion de fichiers, pouvant être actuellement sélectionnées; et
des unités de commande situées sur le boîtier et au voisinage du dispositif d'affichage pour permettre à un utilisateur de sélectionner une opération de gestion de fichier affichée.
